# EUROPEAN PATENT SPECIFICATION

(11) **EP 1 117 228 B1**
(45) Date of publication and mention of the grant of the patent: **18.11.2009**
(21) Application number: 01300188.8
(22) Date of filing: 10.01.2001
(51) Int. Cl.: H04L 29/06, H04L 12/24

(54) **Method for generating a client/server model of a multi-protocol layered transmissions network**
Verfahren zur Erzeugung eines Client/Server Modells in einem geschichteten Multiprotokoll - Übertragungsnetzwerk
Méthode pour générer un modéle client/server d'un réseau de transmissions multiprotocole en couches

(30) Priority: 14.01.2000 IL 13404700
(43) Date of publication of application: 18.07.2001
(73) Proprietor: ECI Telecom Ltd., Petach-Tikva 49517 (IL)
(72) Inventor: Zimmerman, Yakov, Elkana 44814 (IL); Gabso, Einat, Bat-Yam 59556 (IL); Cohen, Merav, Bet-Arie 71947 (IL); Malamud, Natalia, Kefar-Sava 44449 (IL)
(74) Representative: Curell Aguilà, Marcelino

(56) References cited:
- EP-A- 0 923 269
- EP-A- 0 964 546

## Description

### Field of the Invention

The present invention is in the field of digital telecommunication systems in general, and Network Management System /NMS) applications, in particular.

### Background of the Invention

Modem digital telecommunication systems employ single protocol network elements and/or hybrid protocol network elements to form multi-protocol layered transmissions networks. Two network elements can be interconnected over a physical link, or over a logical link where the actual transmission path is on an underlying protocol layer effectively acting as a server protocol layer in a client/server relationship to a client protocol layer requiring a transport service. Each protocol layer is conventionally managed by a protocol layer specific Network Management System (NMS) application, thereby negating client/server relationships between pairs of protocol layers to the detriment of the management of a multi-protocol layered transmissions network.

EP 923.269 discloses the management of a communication network which comprises a plurality of network elements which is based upon modeling of the network by using pre-configured templates that represent the various network elements existing in the network and the connectivities available in the network.

EP 964546 describes a network management system for managing a computer network which includes a database which includes various information about the physical interconnections of individual equipment, about the network configuration and information about the users.

### Summary of the Invention

In accordance with the present invention, there is provided for use in a multi-protocol Network Management System application for managing a multi-protocol layered transmissions network including a plurality of network elements, a method for generating a model of the multi-protocol layered transmission network, the method comprising the steps of:
(a) determining the protocol layers in the multi-protocol layered transmissions network; and
(b) for each protocol layer, mapping out an overlay including the network elements operative in the protocol layer, and at least one physical link and/or the logical links interconnecting pairs of network elements where transport service along a logical link is at least partially provided by a transmission path on a protocol layer directly underlying the protocol layer and the pair of association links between each logical link and its associated transmission path.

The multi-protocol Network Management System (NMS) application implementing a method of an embodiment of the present invention is preferably capable of automatically determining the physical links and the logical links in each protocol layer, and the subsequent association of each logical link to the corresponding transmission path providing the actual transport service thereto. Additionally, the envisaged multi-protocol NMS application preferably supports operator intervention in the client/server model to provide greater flexibility, for example, for enabling the establishment of links with a network element whose adaptation functionality from one technology to another is not directly under the control of the NMS application, enabling the use of the client/server model for modeling purposes, and the like. By virtue of an embodiment of present invention, it is envisaged that a multi-protocol NMS application may facilitate management of multi-protocol layered transmissions networks including *inter alia* a richer content wise representation of a transmissions network on a Graphical User Interface (GUI), alarm management, event propagation, protected path provisioning, and the like.

In order to understand the aspects of the invention and to see how it can be carried out in practice, a preferred embodiment will now be described, by way of a non-limiting example only, with reference to the accompanying drawings, in which similar parts are likewise numbered, and in which:
Fig. 1 is a schematic representation showing the network topology of a multi-protocol layered transmissions network;
Fig. 2 is a flow diagram showing the steps of generating a client/server model of a multi-protocol layered transmissions network as carried out by a multi-protocol Network Management System (NMS) application of an embodiment of the present invention;
Fig. 3 is a schematic representation showing the client/server hierarchy of the IP/SDH/DWM protocol layers of the transmissions network of Figure 1;
Fig. 4 is a schematic representation showing a 3D representation of the client/server model of the transmissions network of Figure 1;
Fig. 5A is a schematic representation of the top view of the overlay of the IP protocol layer of the client/server model of Figure 4;
Fig. 5B is a schematic representation of the overlay of the IP protocol layer of the transmissions network of Figure 1 as generated by a conventional IP NMS application;
Fig. 6A is a schematic representation of the top view of the overlay of the SDH protocol layer of the client/server model of Figure 4;
Fig. 6B is a schematic representation of the overlay of the SDH protocol layer of the transmissions network of Figure 1 as generated by a conventional SDH NMS application;
Fig. 7 is a schematic representation of the overlay of the WDM protocol layer of the client/server model of Figure 4; and
Fig. 8 is a flow diagram showing the steps of applying the model of the present invention in alarm analysis.

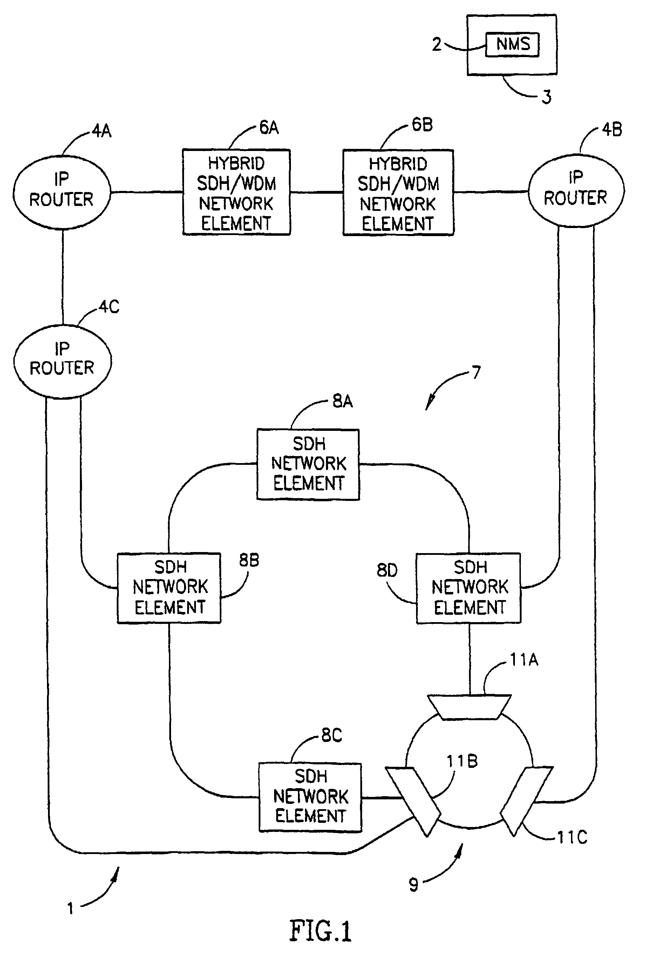

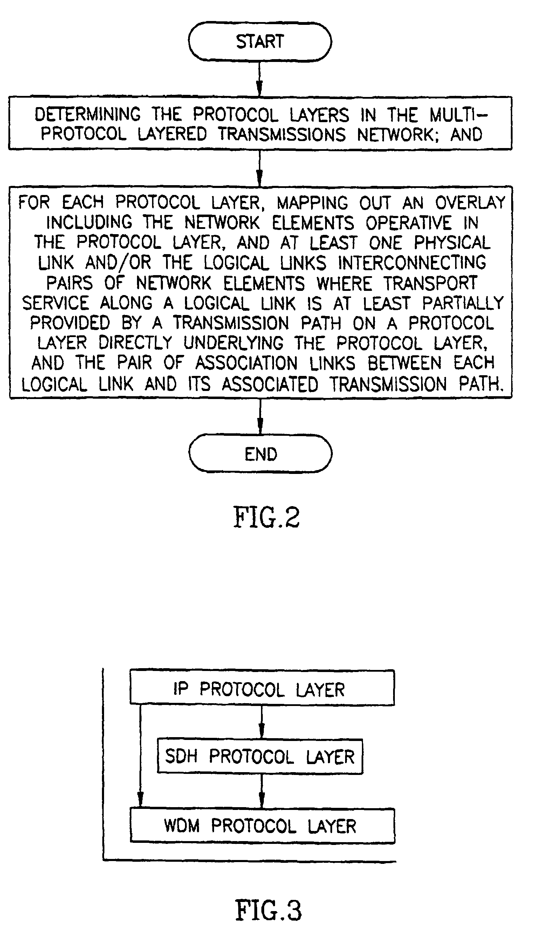

Figure 1 shows a multi-protocol layered transmissions network 1 managed by a multi-protocol Network Management System (NMS) application 2 running on a computer 3. The transmissions network 1 includes networks elements operative on one or more of three protocol layers, namely, IP, SDH and WDM, and in which the WDM protocol layer acts as a server protocol layer to both IP and SDH client protocol layers, and the SDH protocol layer acts as a server protocol layer to the IP client protocol layer (see Figure 3). The network elements include three IP routers 4A, 4B and 4C, a pair of hybrid SDH/WDM network elements 6A and 6B, an SDH ring 7 including SDH network elements 8A, 8B, 8C, and 8D, and an WDM ring 9 including WDM network elements 11A, 11B, and 11C.

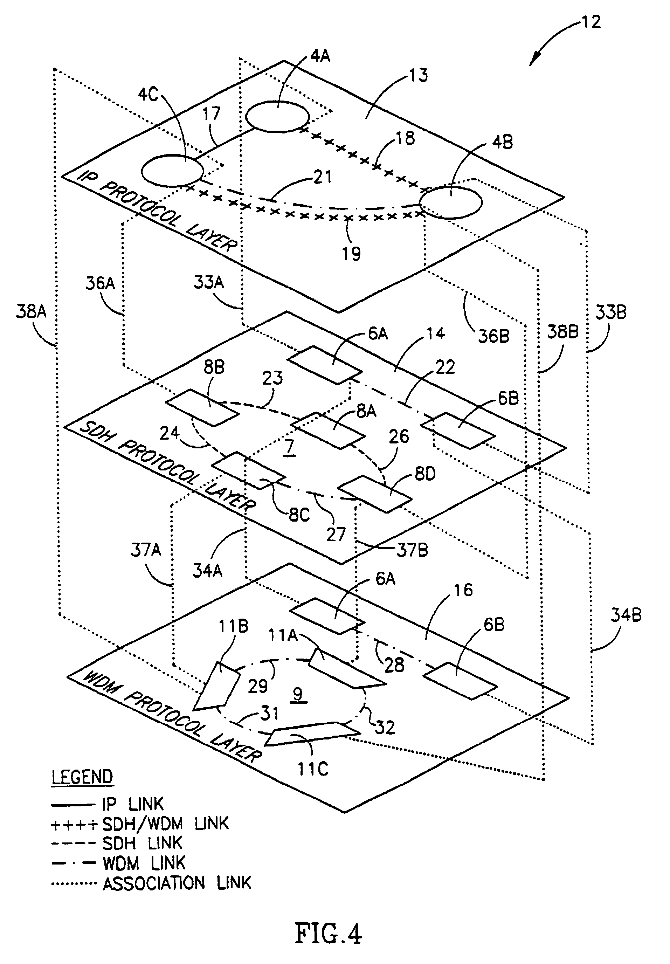

Figure 4 shows a 3D representation of a model 12 of the transmissions network 1 as generated in accordance with the method of an embodiment of the present invention. Model 12 includes three overlays 13, 14 and 16 for the IP, SDH and WDM protocol layers of the transmissions network 1, respectively. Model 12 includes the physical links of each protocol layer, its logical links, and the so-called association links for associating each logical link to the transmission path providing the transport service thereto with one exception being the most underlying protocol layer, in this case the WDM protocol layer, which only includes physical links.

Figure 4 also shows the Legend of the different representations of the different IP/SDH/WDM technologies, the representation of so-called hybrid SDH/WDM logical links which rely on transport services from both SDH and DWM physical links, and association links. These representations are constant per technology or combination of technologies in the sense that the same representation is used for a particular type of link irrespective of the actual overlays being displayed. These representations may also be employed when displaying overlays of protocol layers on a Graphic User Interface (GUI), thereby enabling visual discrimination therebetween. Alternatively, other approaches may be employed including *inter alia* color coding, different lines' thickness, and the like.

The computerized overlay 13 of the IP protocol layer includes four links as follows: A physical IP link 17 interconnecting the IP routers 4A and 4C. A logical SDH/DWM link 18 interconnecting the IP routers 4A and 4B. And, a logical SDH/DWM link 19 and a logical WDM link 21 interconnecting the IP routers 4B and 4C. The computerized overlay 14 of the SDH protocol layer includes five links as follows: A logical WDM link 22 interconnecting the SDH/WDM network elements 6A and 6B. Three physical SDH links 23, 24 and 26 interconnecting the pairs of SDH network elements (8A, 8B), (8B, 8C), and (8A, 8D) and a logical WDM link 27 interconnecting the pair of SDH network elements (8C, 8D). The computerized overlay 16 of the WDM protocol layer includes four links as follows: A physical WDM link 28 interconnecting the SDH/WDM network elements 6A and 6B. And, three physical WDM links 29, 31, and 32 in the WDM ring 9.

Figure 4 also shows five pairs of association links as follows: A pair of association links 33A and 33B associating the logical SDH/WDM link 18 with the logical WDM link 22. A pair of association links 34A and 34B associating the logical WDM link 22 with the physical WDM link 28. A pair of association links 36A and 36B associating the logical SDH/WDM link 19 with the SDH ring 7. A pair of association links 37A and 37B associating the logical WDM link 27 with the WDM ring 9. A pair of association links 38A and 38B associating the WDM logical link 21 with the WDM ring 9.

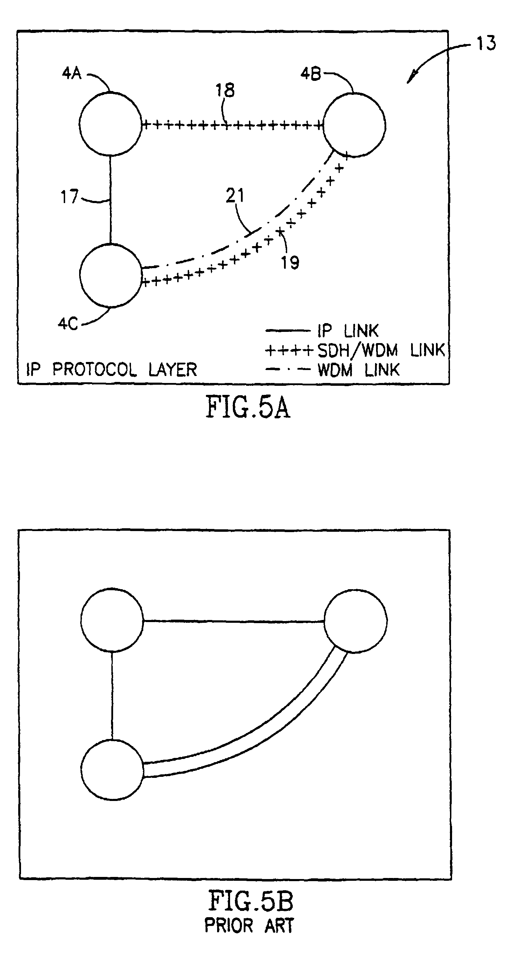

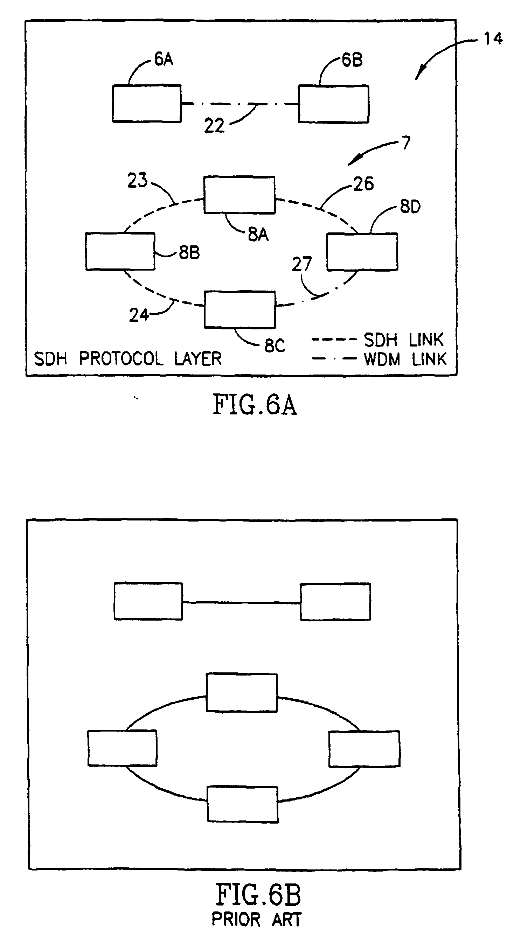

Figures 5A and 6A show that the overlays of the IP and SDH protocol layers 13 and 14 are richer content wise by virtue of the different technologies/combinations of technologies being displayed differently as opposed to their conventionally all being displayed identically as shown in Figures 5B and 6B.

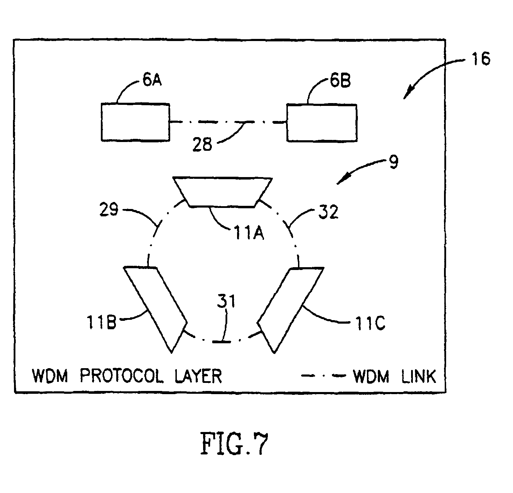

Figure 7 illustrates the WDM protocol layer 16 wherein the three physical WDM links 29, 31 and 32 presents part of WDM ring 9, as previously explained.

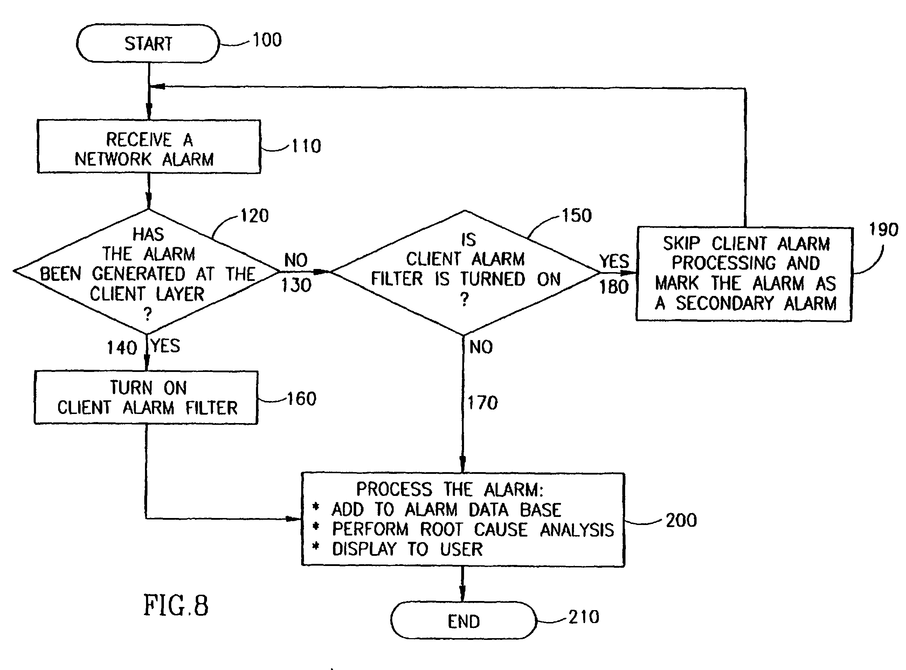

As will be appreciated by a person skilled in the art, construction of a model as disclosed by the present teaching can be used for a variety of applications. A flow diagram of one such non-limiting example of an application is illustrated in Fig. 8. As will also be appreciated by a man skilled in the art other applications such as impact analysis (e.g. evaluating the impact of a future operation at one or more layers, such as maintenance operation, on the operation at the client layer), circuit provisioning based on any desired parameter (e.g. distance, delay, degradation in the signal quality, protection requirements and the like) can be carried out by using such a model as provided by the present teaching.

Fig. 8 presents a flow diagram showing the steps of an embodiment by which a model as disclosed by the present teaching is used in alarm analysis application. One of the major problems associated with the management of networks of the prior art is, that once an alarm is generated, the operator is not able to identify in which layer of the multi-layered network lies the problem. In other words, if the cause for the alarm is at the client layer or in any of the other underlying layers. The major importance of this embodiment is to allow the operator to remove all alarms that are not generated at the upper (client) layer and to focus on those generated only at the server layer. If for example, one of the physical WDM links becomes inoperative, this event can be propagated onto the logical WDM link of the computerized overlay of the SDH protocol layer, and the logical WDM link on the computerized overlay of the IP protocol layer. Therefore, once an alarm is received (110), it is determined whether the alarm is associated the client layer or with any of the underlying layers (120). If the answer is no (130), it is determined whether the client alarm filter is turned on (150). The term "client alarm filter" is used herein to denote any means that is operative to eliminate different alarms that reach the client server and the primary cause for their generation is at a server layer associated with the client layer. If the answer to the latter step is affirmative (180) then there is no need to process a client alarm, the alarm may be marked as a non-client layer alarm (a secondary type of alarm) (190) and the process awaits the receipt of the next alarm.

If on the other hand, it is determined in step (120) that the alarm was generated at one of the underlying layers and not at the client layer (140), the client alarm filter is turned on and the alarm is removed from the list/database of client alarms (160). Following step (160), any one of the following steps may be taken or any combination thereof (200): processing the alarm, adding the alarm to the alarms database, performing root cause analysis of that current alarm and/or providing a display of the alarm.

By another embodiment of the invention, a user can determine whether a path selected satisfies any parameter set or a combination of a number of parameters. For such application, the user set his criteria for the circuit required, the systems finds one possible path through the multiple layers available in accordance with the path end points, and then it is determined whether the path to be provisioned fulfills the criteria set. Preferably, it is determined whether the criteria are met at the client layer and recursively the path is determined for all underlying layers while retaining these criteria. Such selection criteria are preferably selected from the group comprising: distance of transmission, delay allowed in receiving the transmission, degradation of the transmitted signals, protection constrains, and the like or any combination thereof. As will be appreciated by those skilled in the art, in addition or alternatively, the criteria may be used as part of an algorithm for choosing a preferred transmission path while taking into consideration the server layer characteristics.

Insofar as embodiments of the invention described above are implementable, at least in part, using a software-controlled programmable processing device such as a Digital Signal Processor, microprocessor, other processing devices, data processing apparatus or computer system, it will be appreciated that a computer program for configuring a programmable device, apparatus or system to implement the foregoing described methods is envisaged as an aspect of the present invention. The computer program may be embodied as source code and undergo compilation for implementation on a processing device, apparatus or system, or may be embodied as object code, for example. The skilled person would readily understand that the term computer in its most general sense encompasses programmable devices such as referred to above, and data processing apparatus and computer systems.

Suitably, the computer program is stored on a carrier medium in machine or device readable form, for example in solid-state memory or magnetic memory such as disc or tape and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

For the avoidance of doubt, the term "comprising" is used in the description and claims to encompass the meaning "including but not limited to".

While the invention has been described with respect to a limited number of embodiments, it will be appreciated that many variations, modifications, and other applications of the invention can be made within the scope of the appended claims.

## Claims

1. A method for use in a multi-protocol Network Management System application for managing a multi-protocol layered transmissions network including a plurality of network elements, wherein said method is adapted for generating a model of the multi-protocol layered transmissions network and comprising the steps of:
(a) determining the protocol layers in the multi-protocol layered transmissions network; **characterized in that**:
(b) for each protocol layer, mapping out an overlay including the network elements operative in the protocol layer, and the overlay including at least one physical link and/or the logical links interconnecting pairs of network elements where transport service along a logical link is at least partially provided by a transmission path on a protocol layer directly underlying the protocol layer, and having a pair of association links between each logical link in an overlay and its associated transmission path on a protocol layer directly underlying the overlay.

2. The method according to claim 1 and further comprising the step of displaying on a GUI an overlay of one protocol layer of the model with different technologies employed therein being displayed in visually distinctive manners.

3. The method according to either claim 1 or 2 and further comprising the step of displaying on a GUI a top view of the overlays of two or more protocol layers of the model superimposed one on the other.

4. The method according to any one of claims 1 to 3 and further comprising the step of displaying a 3D representation on a GUI of overlays of two or more protocol layers of the model including the pair of association links between each logical link and its associated transmission path.

5. A method according to any preceding claim, operative to distinguish between alarms generated at a client protocol layer and those generated at any of the underlying protocol layers.

6. A method according to any preceding claim, operative to allow the selection of a path in the multi-protocol layered transmissions network by using at least one selection criterion for the path to be provisioned.

7. A method according to claim 6, wherein said at least one selection criterion is selected from the group comprising: distance of transmission, delay allowed in deceiving the transmission, degradation of the transmitted signals, protection constraints or any combination thereof.

8. A system comprising a processor adapted to carry out the method of any preceding claim.

9. A computer program comprising computer- or machine-readable computer program elements which, when executed by a computer; implements the method of any one of claims 1 to 7.

10. A carrier medium carrying a computer program according to claim 9.

## Patentansprüche

1. Methode zur Verwendung in einer Multiprotokoll-Netzwerkmanagementsystemanwendung zur Verwaltung eines geschichteten Multiprotokoll-Übertragungsnetzwerks, welches eine Mehrzahl von Netzwerkelementen beinhaltet, wobei die Methode zur Erstellung eines Modells des geschichteten Multiprotokoll-Übertragungsnetzwerks geeignet ist, und die folgenden Schritte umfasst:
(a) Bestimmung der Protokollschichten in dem geschichteten Multiprotokoll-Übertragungsnetzwerk; und
(b) detaillierte Festlegung, für jede Protokollschicht, eines Overlays einschliesslich der in der Protokollschicht wirksamen Netzwerkelemente, und das Overlay mindestens eine physikalische Verknüpfung und/oder die logischen Verknüpfungen, die die Netzwerkelemente paarweise verbinden, einschliesst, wo einen Transportdienst eine logische Verknüpfung entlang zumindest teilweise von einem Übertragungspfad auf einer der Protokollschicht direkt zugrunde liegenden Protokollschicht bereitgestellt wird, und ein Paar assoziierende Verknüpfungen zwischen jeder logischen Verknüpfung in einem Overlay und ihrem zugehörigen Übertragungspfad auf einer der Protokollschicht direkt zugrunde liegenden des Overlays umfasst.

2. Die Methode gemäss Anspruch 1 und des Weiteren den Schritt des Anzeigens, auf einer grafischen Benutzeroberfläche (GUI), eines Overlays einer Protokollschicht des Modells umfassend, wobei darin benutzte verschiedene Technologien auf optisch auffällige Weisen dargestellt werden.

3. Die Methode entweder gemäss Anspruch 1 oder 2, und des Weiteren den Schritt der Darstellung auf einer GUI einer Draufsicht der Overlays von zwei oder mehr Protokollschichten des Modells, wobei eine auf der anderen überlagert wird, umfassend.

4. Die Methode gemäss beliebiger der Ansprüche 1 bis 3, und des Weiteren den Schritt der Anzeige einer 3D-Darstellung auf einer GUI von Overlays von zwei oder mehr Protokollschichten des Modells, einschliesslich des Paares von assoziierenden Verknüpfungen zwischen jeder logischen Verknüpfung und ihrem zugehörigen Übertragungspfad, umfassend.

5. Eine Methode gemäss beliebigem vorangegangenen Anspruch, die zur Unterscheidung zwischen in einer Client-Protokollschicht erzeugten Alarmen und jenen erzeugten und beliebigen der zugrunde liegenden Protokollschichten fähig ist.

6. Eine Methode gemäss beliebigem vorangegangenen Anspruch, die zur Ermöglichung der Auswahl eines Pfades in dem geschichteten Multiprotokoll-Übertragungsnetzwerk anhand mindestens eines Auswahlkriteriums für den vorzusehenden Pfad fähig ist.

7. Eine Methode gemäss Anspruch 6, worin das besagte mindestens eine Auswahlkriterium aus der Folgendes umfassenden Gruppe ausgewählt wird: Übertragungsdistanz, bei Empfang der Übertragung zulässige Verzögerung, Verschlechterung der übertragenen Signale, Schutzbegrenzungen oder beliebige diesbezügliche Kombination.

8. Ein System mit einem Prozessor, der zur Ausführung der Methode jedes beliebigen vorangegangenen Anspruchs geeignet ist.

9. Ein Computerprogramm mit computer- oder maschinenlesbaren Computerprogrammelementen welches wenn es von einem Computer ausgeführt wird der Methode von beliebigen der Ansprüche 1 bis 7 umgesetz wird.

10. Ein Trägermedium, das ein Computerprogramm gemäss Anspruch 9 trägt.

## Revendications

1. Procédé pour l'utilisation dans une application de Système de Gestion de Réseau multiprotocole pour la gestion d'un réseau de transmissions en couches multiprotocole comportant une pluralité d'éléments de réseau, ledit procédé étant apte à générer un modèle du réseau de transmissions en couches multiprotocole et comprenant les étapes de:
(a) détermination des couches de protocoles dans le réseau de transmissions en couches multiprotocole; **caractérisé en ce que:**
(b) pour chaque couche de protocole, mappage d'un recouvrement comportant les éléments de réseau fonctionnant dans la couche de protocole, et le recouvrement comprenant au moins un lien physique et/ou les liens logiques interconnectant des paires d'éléments de réseau où le service de transport le long d'un lien logique est au moins partiellement fourni par un trajet de transmission sur une couche de protocole directement sous-jacente à la couche de protocole, et comprenant une paire de liens d'association entre chaque lien logique dans un recouvrement et son trajet de transmission associé sur une couche de protocole directement sous-jacente au recouvrement.

2. Procédé selon la revendication 1, comprenant en outre l'étape d'affichage sur une GUI d'un recouvrement d'une couche de protocole du modèle, les différentes technologies employées dans celui-ci étant affichées de manières visuellement différentes.

3. Procédé selon la revendication 1 ou 2, et comprenant en outre l'étape d'affichage sur une GUI d'une vue de dessus des recouvrements de deux ou plusieurs couches de protocoles du modèle superposés les uns sur les autres.

4. Procédé selon l'une quelconque des revendications 1 ou 3, et comprenant en outre l'étape d'affichage d'une représentation 3D sur une GUI de recouvrements de deux ou plusieurs couches de protocoles du modèle comportant la paire de liens d'association entre chaque lien logique et son trajet de transmission associé.

5. Procédé selon l'une quelconque des revendications précédentes, fonctionnant pour différencier des alarmes générées et au niveau d'une couche de protocole client et celles générées au niveau de n'importe laquelle des couches de protocoles sous-jacentes.

6. Procédé selon l'une quelconque des revendications précédentes, fonctionnant pour permettre la sélection d'un trajet dans le réseau de transmissions en couches multiprotocole en utilisant au moins un critère de sélection pour le trajet à fournir.

7. Procédé selon la revendication 6, dans lequel ledit au moins un critère de sélection est sélectionné dans le groupe comprenant : la distance de transmission, le retard de réception de transmission autorisé, la dégradation des signaux transmis, les contraintes de protection et toute combinaison de ceux-ci.

8. Système comprenant un processeur apte à exécuter le procédé de l'une quelconque des revendications précédentes.

9. Programme informatique comprenant des éléments de programme informatique lisibles par ordinateur ou par machine qui, lorsqu'ils sont exécutés par un ordinateur, mettent en oeuvre le procédé selon l'une quelconque des revendications 1 à 7.

10. Support portant un programme informatique conformément à la revendication 9.
